# EUROPEAN PATENT APPLICATION

(11) **EP 2 595 353 A1**
(43) Date of publication of application: **22.05.2013**
(21) Application number: 11306487.7
(22) Date of filing: 15.11.2011
(51) Int. Cl.: H04L 29/06

(54) **Method for rendering a multimedia asset, a related system, media client and related media server**

(71) Applicant: Alcatel Lucent, 75007 Paris (FR)
(72) Inventor: Lou, Zhe, 2640 Mortsel (BE); Wu, Tingyao, 3001 Leuven (BE)
(74) Representative: ALU Antw Patent Attorneys

(57) **Abstract**

The present invention relates to a Method, system, and related media client and media server for rendering/PLAYING a media asset by a media client where the media asset is provided/streamed by a media server. The media client being coupled to the media server over a communications network. The method of the present invention includes the step of the media client monitoring a fragment preview signal received at the media client, interpreting the fragment preview signal and subsequently determining an associated preview Media asset fragment based on the fragment preview signal which is received at the media client. The media server further selects /retrieves the preview_media asset fragment (from a media asset repository where the media asset repository is coupled to the media server and subsequently the media Client renders the_preview media asset fragment retrieved by the media server.
The fragment preview signal may be based on a user pointing with a mouse at a later point of time on a progress bar of a video rendering application.

## Description

The present invention relates to a Method as described in the preamble of claim 1, a system described in the preamble of claim 3, a related media client described in the preamble of claim 5 and a related Media server described in the preamble of claim 8.

Such a method for playing a multimedia asset at a media client is already well known in the art. Today, more and more people watch video from the Internet using a media client being for instance a personal computer, a networked television application, a mobile phone with a media player etc. For some larger media assets like movies or videos, people tend to jump from one segment to another to watch the most interesting part or just skip some boring parts of the movie. Disadvantageously people do not know in advance whether or not a fragment they jump to is interesting or not as there is no preview information available in advance.

If a user is watching a media asset at a certain point in time of the entire duration of the media asset and wishes to jump ahead towards later fragment, it is possible to move the mouse cursor to the later location at the progress bar of the media rendering application, and click the progress bar at the location of the media asset that the user wishes to preview. Before selecting the location at the progress bar of the media player application running on the media client, the user does not have any idea what is going to be shown at the selected point. After selecting the next multimedia asset portion to be played the client device needs to request and receive the selected portion of the media asset, the user has to wait until the player receives the requested segment

However only when the requested segments are played, the user may realize that the newly received segment is not what he expected. Then he has to repeat searching for the next interesting scene. This manner of watching video is time-consuming and in addition awkward.

An objective of the present invention is to provide a method and related system for playing a multimedia asset of the above known type but wherein a user of such method is enabled to preview selected fragments of the multimedia asset currently being watched where these fragments are chosen by the client In a more predictive and intuitive manner.

According to the present invention, this object is achieved by the method according to claim 1, a related system as described in claim 3, a related media client as described in claim 5 and a related media server as described in claim 8.

Indeed, by first monitoring the occurrence of a fragment preview request signal being received at the media client, where the fragment preview request signals is a signal that indicates the user's request to preview a certain media asset fragment, by subsequently interpreting the fragment preview request signal, then determining a preview Media asset fragment based on the fragment preview request signal received by the media client, followed by , the media server selecting and retrieving the preview media asset fragment from a coupled media asset repository and finally by the media Client rendering the relevant media asset fragment which is retrieved by the media server, the user can preview a requested fragment , enabling a user to browse the multimedia asset in a more predictive and intuitive manner.

The media client may play the preview integrated in the ongoing streaming of the media asset or may play the preview fragment of the media asset separately.

In this way only a relevant fragment of an entire media asset needs to be transferred by means of streaming or otherwise from media server towards media client and consequentially a preview fragment is made available in a faster way manner.

Another characteristic feature of the present invention is described in claims 2, 4 and 9.

The method further comprises the step of generating a derivative fragment by processing the_preview fragment of said media asset, before the step of the media client presenting the relevant video asset fragment. This processing may include one or more of the following operations on the determined relevant fragment of a media asset: being filtering, object recognition, scaling, compression, 3D extraction, etc.

In case of Scaling and compression based on the network bandwidth, the preview media, i.e. the retrieved preview fragment further can be scaled down or compressed first before being sent back to the client. In case of filtering, the background of the retrieved preview fragment and/or other elements from the preview fragment could be filtered out the fragment before sending the preview fragment towards the client where filtering may be performed based on certain requirements. In case of object recognition, certain object can be recognized and highlighted.

In this manner the derivative fragment of the relevant fragment of the media asset can be provided quicker and more relevant to the user requesting a preview as time required for transferring a derivative fragment is even shorter than the time required for transferring a relevant fragment of a media asset only

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a functional representation of the system for rendering a multimedia asset wherein the implementation of the present invention is realized.
FIG. 2 represents a functional representation of a media client MC that is coupled to a media server MS of the according to the present invention.

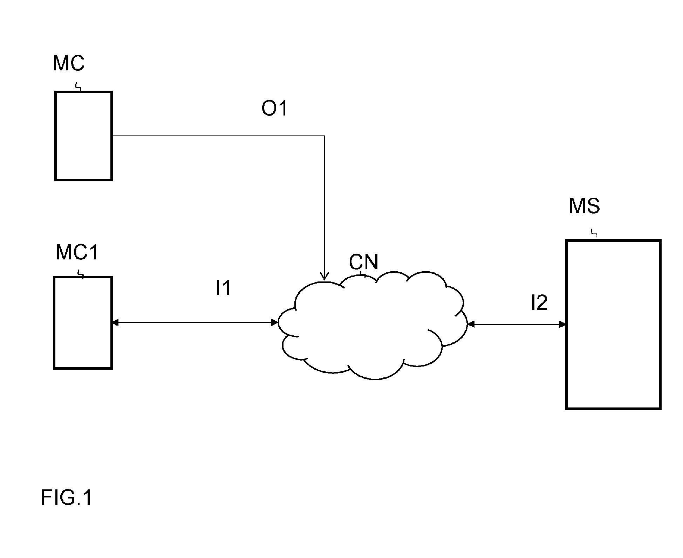

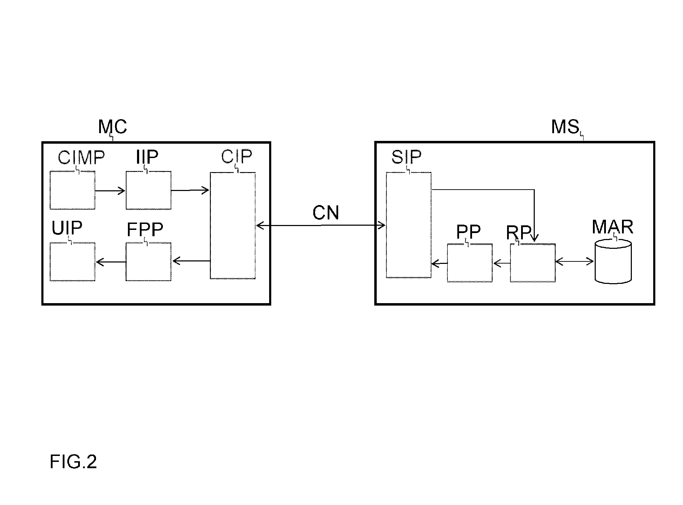

In the following paragraphs, referring to the drawings, an implementation of the method and the related devices according to the present invention will be described. In the first paragraph of this description the main elements of this network as presented in FIG. 1 and FIG.2 are described. In the second paragraph, connections between the before mentioned network elements and described means are defined. In the succeeding paragraph the actual execution of the method for rendering a multimedia asset.

A first essential element of this embodiment of the present invention is a media client MC for rendering a media asset that is provided by a media server by means of streaming. Although such a system usually includes a plurality of media clients coupled to a media server, in the current embodiment only two media clients MC and MC1 are presented. Such a media client MC, MC1 may be a internet connected personal computer supporting media rendering technologies RTP/RTSP, RTMP, HTTP streaming, etc. and media rendering applications such as Flash Player, HTML5 video, etc. Some well-known websites like YouTube, Facebook, etc. are using these kinds of technologies and applications to present videos to their clients.

The second essential element is a media server MS that is able to provide media assets to each media client MC of a plurality of media clients MC, MC1. Each of the media clients of a plurality of such media clients are coupled to the media server MS over a communications network CN.

The providing of the media asset from the media server to the media client can be dealt with by real time streaming technologies like RTP/RTSP, RTMP, HTTP streaming, etc.

Both Media client MC, MC1 are coupled to the media server over the communications network. Depending on the type of media client MC, e.g. a mobile or fixed device the communications interface towards the communications network may be different. The communications network may be a core internet network in concatenation with an access network and or a home network including wired and/or wireless connections in case of a fixed personal computer.

Alternatively, in case the media client is a mobile device the communications network includes wireless network interfaces like GSM, UMTS, LTE, WIFI, Bluetooth, etc. or others.

The Media Client MC, for rendering a media asset, first comprises a client input monitoring part CIMP for monitoring a fragment preview request signal at the media client MC. The client input monitoring part CIMP may be an integrated or external input device of the media client where an input device may be a mouse, a keyboard or other device. Further, the media client comprises an input interpreting part IIP, for interpreting the fragment preview request signal and determining the preview Fragment of the Media asset based on the fragment preview request signal and a fragment presenting part FPP that is adapted to render the preview fragment of the media asset retrieved from a media asset repository. Additionally the fragment presenting part FPP may be able to integrate the preview fragment of the media asset in the initial full media asset rendering at the media client MC or the fragment presenting part FPP alternatively may be adapted to render the preview fragment of the media asset individually.

Furthermore the media client may comprise a user interfacing part UIP for interfacing with a user of the media client MC which user interfacing part may be an integrated display or externally coupled display.

The client interfacing part CIP deals with interfacing between the interpreting part IIP and fragment presenting part FPP on one side and the communications network CN on the other side.

The client input monitoring part CIMP of the media client MC is coupled with an output to an input of the input interpreting part IIP that in turn is coupled with an output to an input of the client interfacing part CIP. The client interfacing part CIP has an input/output-terminal that is at the same time an input/output terminal of the media client MC. Additionally, the client interfacing part CIP is coupled with an output to an input of the fragment presenting part FPP that in turn is coupled with the user interfacing part UIP.

The Media Server MS, first comprises a retrieving part RP for selecting and/or retrieving the preview fragment of the media asset from a media asset repository MAR and a media asset repository MAR for storing media assets for provisioning to media clients by means of streaming.

The media Server MS further comprises a processing part PP, for generating a derivative fragment by processing the preview fragment of the media asset, before the step of the media client presenting the preview media asset fragment being a video fragment.

The server interfacing part SIP deals with interfacing between the retrieving part RP and the processing part PP on one side and the communications network on the other side.

The server interfacing part SIP has an input/output-terminal that is at the same time an input/output terminal of the media server MS. The server interfacing part SIP further is coupled with an output-terminal to an input-terminal of the retrieving part RP that in turn is coupled with an output to an input of the processing part PP. The retrieving part RP further is coupled to the media asset repository MAR. The processing part PP further is coupled with an output to an input of the server interfacing part SIP.

In order to explain the execution of the present invention it is assumed that a user of a first media client MC, the media client in this embodiment being a personal computer having a video rendering application installed, e.g. using YOUTUBE video rendering functionality or browsing the internet using a web browser like Internet Explorer, Chrome, Firefox or the like for browsing websites providing e.g. video content like YOUTUBE website or AOL website, BBC/CNN, etc.

Currently a certain media asset being a video on subject X is being streamed from YouTube and a YouTube media server MS. The video on subject X, being stored at the media asset repository MAR that is included in the media server MS, is provided to media client MC by means of streaming. The video is received at the media client MC and rendered at a display that is coupled to the media client MC. Now it is further assumed the watching user wishes to preview the later content of the YouTube video with subject X. Therefore the user, with a mouse coupled to the personal computer points at a later point of time on the progress bar of the video rendering application. The later point of time indicates a later fragment of the YouTube video on subject X. Then the client input monitoring part CIMP monitors the fragment preview signal i.e. the position of the mouse cursor at the progress bar of the media rendering application and forwards this position on the progress bar towards the input interpreting part IIP that based on the monitored mouse cursor position determines the relative time position of the video. Now assumed that the input interpreting part IIP, interprets this mouse position into a time position (50') of the movie and optionally as a feedback to the user shows this time information on top of the ongoing movie immediately. After the selecting the time position of 50' as the starting point of a preview fragment by clicking the mouse clicking, the input interpreting part IIP of the media client MC will send the 50' time information to the media server MS via the client interpreting part the coupled communications network and the coupled server interfacing part SIP. The retrieving part RP then will look into the media asset repository file with respect to the video with subject X and find the relevant frame or frames associated with time 50' from the beginning of the movie. Alternatively the retrieving part could fetch one or more subsequent frames of YouTube video with subject X (where the number of subsequent frames is to be predetermined) starting from frame including time position 50'. Subsequently the retrieving part RP sends the retrieved frame or sequence of frames via the server interfacing part SIP and the communications network CN towards the requesting media client MC. At receipt of the retrieved frame or sequence of frames being the preview frame(s) at the media client MC the fragment presenting part FPP of the media client MC presents the relevant fragment of said media asset retrieved from a media asset repository at the User interfacing part being the coupled display.

The fragment presenting part FPP is able to integrate the preview fragment of the media asset in the ongoing media asset rendering, i.e. streaming of the entire video with subject X, at the media client (MC). The integrating may be mixing the preview in the ongoing video presentation as a picture in picture presentation or be overlaying the preview on top of the ongoing video presentation.

Alternatively fragment presenting part FPP is able to render the preview fragment of the media asset individually on the coupled display, which is then instead of the playing of the full video with subject X.

Additionally the Media Server MS further may comprise a processing part PP for generating a derivative fragment by processing the first determined preview fragment of the media asset, i.e. video with subject X, before the step of the media client presenting the relevant video asset fragment. The processing of the preview fragment of the media asset may be scaling down the frame and subsequently send the downscaled relevant fragment, i.e. the derivative fragment to the media client MC.

Depending on the application requirements, other media processing technologies can be applied on the preview fragment in order to obtain the derivative fragment.

Other media processing technologies may be filtering, object recognition, scaling, compression, 3D extraction, etc on said relevant media asset fragment.

In case of Scaling and compression based on the network bandwidth, the preview media, i.e. the retrieved preview fragment further can be scaled down or compressed first before being sent back to the client. In case of filtering, the background of the retrieved preview fragment and/or other elements from the preview fragment could be filtered out the fragment before sending the preview fragment towards the client where filtering may be performed based on certain requirements. In case of object recognition, certain object can be recognized and highlighted.

It is to be noted that instead of the media asset being a video asset with or without audio, the media asset may also be an audio asset only.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for rendering a media asset by a media client (MC), said media asset being provided/streamed by a media server (MS), said media client (MC) being coupled to said media server (MS) over a communications network (CN), **CHARACTERISED IN THAT** said method comprises the steps of:
a. said media client (MC) monitoring a fragment preview request signal received at said media client (MC); and
b. interpreting said fragment preview request signal and determining an associated preview Media asset fragment based on said fragment preview request signal received;
c. said media server (MS) selecting and retrieving said preview media asset fragment from a media asset repository said media asset repository being coupled to said media server (MS);
d. said media Client (MC) rendering said preview media asset fragment retrieved by said media server (MS).

2. Method for rendering a media asset fragment according to claim 1, **CHARACTERISED IN THAT** said method further comprises the step of generating a derivative fragment by processing said preview fragment of said media asset, before the step of said media client presenting said preview relevant video asset fragment.

3. System for rendering a media asset by a media client (MC), said media asset being provided by a media server (MS), said system comprising a media client (MC) and a media server (MS) said media client (MC) being coupled to said media server (MS) over a communications network (CN), **CHARACTERISED IN THAT** said system comprises:
a. means in said media client (MC) for monitoring a fragment preview request signal received at said media client (MC); and
b. means in for interpreting said fragment preview request signal and determining an associated preview Media asset fragment based on said fragment preview request signal received;
c. means in said media server (MS) for selecting and retrieving said preview_media asset fragment from a media asset repository said media asset repository being coupled to said media server (MS);
d. means in said media Client (MC) for rendering said preview media asset fragment retrieved by said media server (MS).

4. System, for rendering a media asset fragment according to claim 3, **CHARACTERISED IN THAT** said system further comprises means for generating a derivative fragment by processing said preview fragment of said media asset.

5. Media Client (MC), for rendering a media asset, said media asset being provided by a media server (MS), said media client (MC) being coupled to said media server (MS) over a communications network (CN), **CHARACTERISED IN THAT** said media client (MC) comprises:
a. a client input monitoring part (CIMP) for monitoring a fragment preview signal at said media client (MC): and
b. an input interpreting part (IIP), for interpreting said fragment preview signal and determining an associated preview Fragment of said Media asset based on said fragment preview signal; and
c. a fragment presenting part (FPP) adapted to render said preview fragment of said media asset retrieved from a media asset repository.

6. Media Client (MC), for rendering a media asset, according to claim 5, **CHARACTERISED IN THAT** said fragment presenting part (FPP) is adapted to integrate said preview fragment of said media asset in said media asset rendering at said media client (MC).

7. Media Client (MC), for rendering a media asset, according to claim 5, **CHARACTERISED IN THAT** said fragment presenting part (FPP) is adapted to render said preview fragment of said media asset individually.

8. Media Server (MS) for providing a media asset to a media client (MC) that is able to render said media asset provided by said media server (MS), said media client (MC) being coupled to said media server (MS) over a communications network (CN), **CHARACTERISED IN THAT** said media server (MS) comprises a retrieving part (RP) for selecting/retrieving said preview fragment of said media asset from a media asset repository (MAR) (coupled to said retrieving part (RP)), said preview fragment being determined based on a fragment preview signal received at said media client (MC).

9. Media Server (MS) for providing a media asset to a media client (MC) according to claim 8, **CHARACTERISED IN THAT** said Media Server (MS) further comprises a processing part (PP), for generating a derivative fragment by processing said preview fragment of said media asset, before the step of said media client presenting said preview video asset fragment.
